**Europäisches Patentamt**

**European Patent Office**

**Office européen des brevets**

(11) Publication number: **0 144 291**
**B1**

## (12) EUROPEAN PATENT SPECIFICATION

(45) Date of publication of patent specification: **12.10.88**

(21) Application number: **84830199.0**

(22) Date of filing: **29.06.84**

(51) Int. Cl.⁴: **A 01 F 12/44**

(54) Improvements to combine harvesters.

(30) Priority: **30.11.83 IT 6825683**

(43) Date of publication of application:
**12.06.85 Bulletin 85/24**

(45) Publication of the grant of the patent:
**12.10.88 Bulletin 88/41**

(84) Designated Contracting States:
**DE FR GB**

(56) References cited:
**EP-A-0 073 179**
**FR-A-2 267 694**
**FR-A-2 315 841**
**FR-A-2 333 436**
**US-A-4 180 081**
**US-A-4 270 551**

(73) Proprietor: **FIATGEOTECH - TECNOLOGIE PER
LA TERRA S.p.A.
Viale delle Nazioni, 55
I-41100 Modena (IT)**

(72) Inventor: **Raineri, Giuseppe
Via Bellini 20/22
I-36061 Bassano Del Grappa Vicenza (IT)**

(74) Representative: **Notaro, Giancarlo et al
c/o Jacobacci-Casetta & Perani S.p.A. Via Alfieri,
17
I-10121 Torino (IT)**

Courier Press, Leamington Spa, England.

## Description

The present invention relates to combine harvesters of the known type comprising:
a threshing unit,
a pair of contra-rotating transverse distributor screws for discharging downwardly the produce received from the threshing unit and distributing it over the entire width of the machine,
a transverse accelerator roller situated below the two distributor screws for accelerating the fall of the produce,
a substantially vertical, fixed transverse wall adjacent the accelerator roller and adapter to cooperate with it to enable the acceleration of the produce,
a cleaning unit situated below the accelerator roller and including a shaking box—having at least two cleaning screens lying one above the other—and a shaking table located above the upper cleaning screen, and
means for directing a current of air at the produce accelerated by the accelerator roller and the produce falling onto the cleaning screens, in order to cause the separation of light material from the heavier grain.

A combine harvester of the type referred to above is described and illustrated in Italian utility model application No. 53561—B/81 and also in the corresponding European patent specification No. 0 073 179. In this known machine, the produce accelerated by the accelerator roller falls in a vertical trajectory onto an oscillating chute for directing the product onto the cleaning screens. During the accelerated fall, the produce is subjected to a jet of air generated by fans and a good proportion of the light material, having less inertia than the heavier grain, is separated by the air and expelled from the rear part of the combine harvester.

It is clear that, the intensity of the blown air and the velocity of the fall of the produce remaining constant, the effectiveness of the air-separation depends on the distance travelled by the produce under the action of the air, that is, on the extent of area of air-separation; the greater this area, the greater the degree of separation which will occur as a result.

The object of the present invention is to provide a combine harvester of the type specified above, which will be able to ensure an effective separation with simple and reliable means.

In order to achieve this object, the invention provides a combine harvester of the type specified at the beginning of the present description, characterized by the following combination of characteristics:
a) the lower part of the fixed transverse wall is shaped so as to incline the flow of the produce accelerated by the accelerator roller with respect to a vertical transverse plane,
b) the shaking table is rigidly supported by the shaking box immediately above the front part of the upper cleaning screen, in an area towards which the inclined flow of the produce is directed,
c) no further collecting table for the produce is interposed between the accelerator roller and the shaking box.

In this manner, an improved air-separation action is obtained, since the area of separation is increased with respect to the known solution cited above.

Further characteristics and advantages of the present invention will emerge from the description which follows with reference to the attached drawings, supplied purely by way of non-limiting example, in which:
Figure 1 is a diagrammatic side elevational view of a combine harvester according to the invention, and
Figure 2 illustrates a detail of the machine of Figure 1 on an enlarged scale.

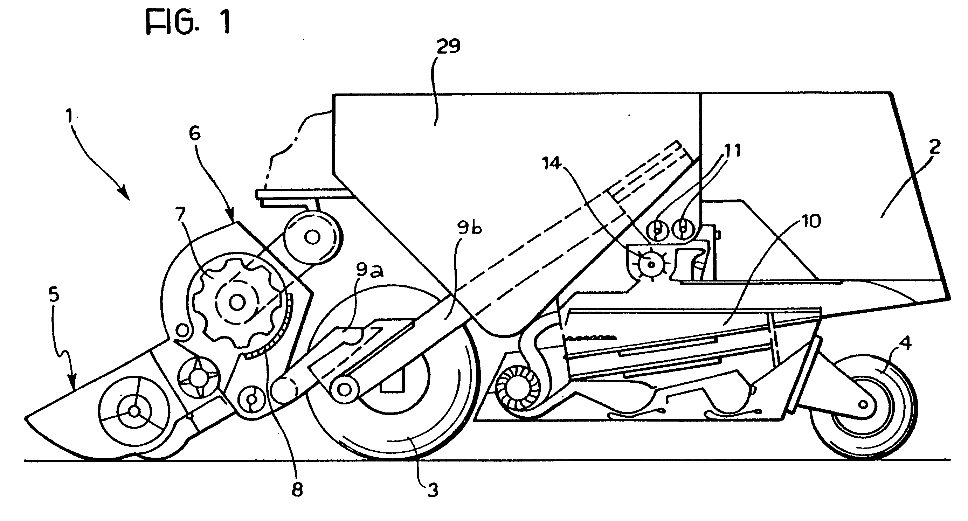

In Figure 1, a combine harvester, generally indicated 1, has a fixed structure 2 and is mounted on front wheels 3 and rear wheels 4. The combine harvester is provided at the front with a cutting platform 5 and a threshing unit 6 including a threshing roller 7 of the axial-flow type and a thresher concave 8. Two conveyors 9a, 9b, arranged in series with each other, convey the produce leaving the threshing unit 6 to the cleaning unit of the machine, generally indicated 10.

The general structure of the combine harvester illustrated in Figure 1 is described in detail in the prior Italian Utility Model Application No. 53321—B/80 filed by the same Applicant, and in the corresponding European Patent Specification No. 0 042 824.

Below the discharge end of the conveyor 9b there are arranged two contra-rotating transverse distributor screws 11.

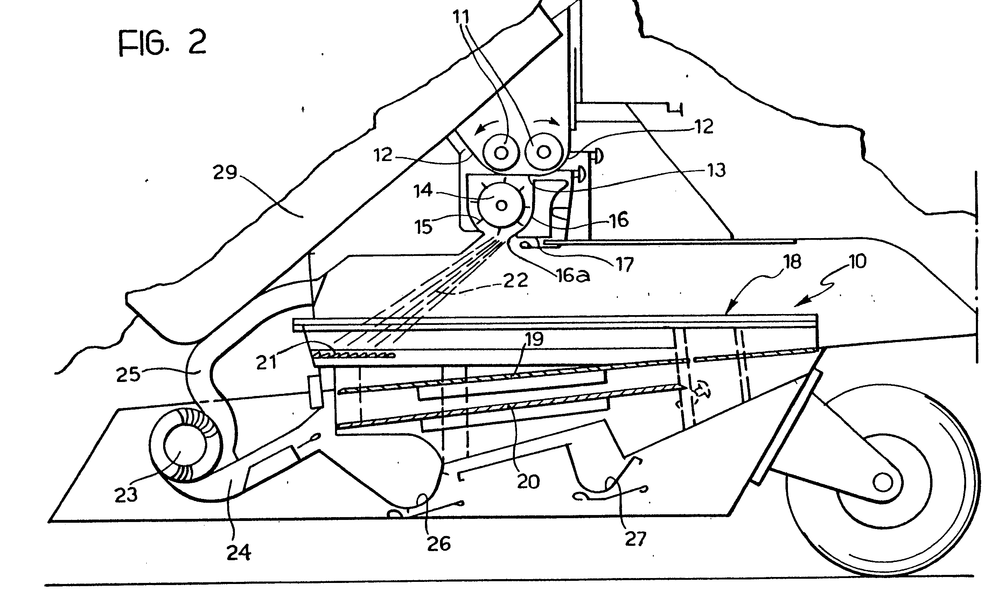

With reference to Figure 2, the two distributor screws 11 are adjacent two walls 12 which form part of the fixed structure 2 of the machine and are situated below the screws. The facing edges of the two walls 12 are spaced from each other so as to define an aperture 13 below the two screws 11.

The details of construction of a preferred embodiment of the screws and the fixed structure associated with them are described in the aforementioned Italian Utility Model Application No. 53561—B/81 and in the corresponding European Patent Specification No. 0 073 179.

The two distributor screws 11 are adapted to distribute the material leaving the conveyor 9b over the entire width of the machine and to make the material fall through the transverse aperture 13.

In the present description, and in the claims which follow, the expression "transverse" refers to a direction perpendicular to a longitudinal vertical plane of the machine.

An accelerator roller 14 rotatable about a transverse axis is mounted below the two distributor screws 11 for accelerating the fall of the produce distributed by the screws 11.

A preferred embodiment of this accelerator roller is also described in the European Patent Specification No. 0 073 179 cited above. The accelerator roller 14 is provided with a series of axial ribs 15, preferably of rubber, which cooperate with a substantially vertical fixed wall 16 in order to accelerate the fall of the produce towards the bottom.

The wall 16 forms part of a box member 17 secured to the structure of the machine by any known method (for example, in the manner described in the European Patent Specification No. 0 073 179).

According to the present invention, the lower part of the fixed transverse wall 16, indicated 16a, is shaped so as to incline the flow of the produce accelerated by the roller 14 with respect to a vertical transverse plane. In the illustrated example, the flow of produce from the roller 14 is inclined towards the front of the machine.

The cleaning unit 10 comprises a shaking box 18 of a conventional type, having a pair of superimposed cleaning screens 19, 20. The shaking box 18 is provided furthermore with an integral table 21 situated above and in front of the cleaning screens 19, 20 in an area towards which the inclined flow (indicated 22) of the produce from the roller 14 is directed.

A fan 23 is adapted to direct a flow of air through ducts 24, 25 leading to the zone of the cleaning screens 19, 20 and into the zone of the inclined flow of produce 22, respectively.

Below the cleaning screens 19, 20 are arranged a collection bed 26, in which the cleaned grain is collected and from which it is transferred to the grain tank 29, with which the machine is provided, by means of a conveyor device of a known type (not illustrated), and a collection bed 27 for the reclaimed material. The material which is collected on the bed 27 is transferred back to the transverse screws 11 by means of the conveyor device of a known type (not illustrated) to undergo a further cleaning cycle.

During operation, the material leaving the conveyor 9b is distributed over the entire width of the machine by the transverse screws 11 and falls through the aperture 13 into the space between the wall 16 and the accelerator roller 14 through which the latter causes it to accelerate in a flow which is deflected in the manner illustrated in Figure 2 by the lower part of the wall 16.

The deflected and accelerated flow of produce is subjected to the current of air from the duct 25, as a result of which the light material is separated from the heavier grain and is deposited on the ground below the machine. The material which falls onto the shaking table 21 is transferred from there to the cleaning screens 19, 20 where it is subjected to the current of air from the duct 24, which effects a further separation. The grain which reaches the collection bed 26 is conveyed to the grain tank of the machine, while the material which reaches the collection bed 27 is returned to the distributor screws 11 to undergo a further cleaning cycle.

Unlike the prior solution illustrated in the European Patent Application No. 0 073 179, no further collecting table for the produce is interposed between the accelerator roller 14 and the shaking box 18, which makes it possible to utilise all the space below the roller for the air-separation. The extent of the air-separation area is further increased by the fact that the flow of produce leaving the roller 14 does not lie in a vertical plane but is inclined towards the front of the machine.

**Claim**

Combine harvester, comprising:
a threshing unit (6),
a pair of contra-rotating transverse distributor screws (11) for discharging downwardly the produce received from the threshing unit (6) and distributing it over the entire width of the machine,
a transverse accelerator roller (14) situated below the two distributor screws (11) for accelerating the fall of the produce,
a substantially vertical, fixed transverse wall (16) adjacent the accelerator roller (14) and adapted to cooperate with the latter to enable the acceleration of the produce,
a cleaning unit (10) situated below the accelerator roller (14) and including a shaking box (18)—having at least two cleaning screens (19, 20) lying one above the other—and a shaking table (21) located above the upper cleaning screen (19),
means (23—25) for directing a current of air at the produce accelerated by the accelerator roller (14) and the produce which falls onto the cleaning screens (19, 20)
characterized by the following combination of characteristics:
a) the lower part of the fixed transverse wall (16) is shaped so as to incline the flow of the produce accelerated by the accelerator roller (14) with respect to a vertical transverse plane,
b) the shaking table (21) is rigidly supported by the shaking box (18) immediately above the front part of the upper cleaning screen (19), in an area towards which the inclined flow of the produce is directed,
c) no further collecting table for the produce is interposed between the accelerator roller (14) and the shaking box (18).

**Patentanspruch**

Mähdrescher, umfassend
eine Drescheinheit (6),
ein Paar von entgegengesetzt zueinander sich drehenden Quer-Verteilerschnecken (11) für die Abgabe des von der Drescheinheit (6) aufgenommenen Produkts nach unten und zur Verteilung des Produkts über die gesamte Breite der Maschine,
eine Quer-Beschleunigungswalze (14), die unterhalb der beiden Verteilerschnecken (11) zur Beschleunigung des Fallens des Produktes angeordnet ist,
eine weitgehend vertikale feststehende Quer-Wand (16), die neben der Beschleunigungswalze (14) vorgesehen ist und die mit dieser derart zusammenzuwirken vermag, daß die Beschleunigung des Produkts ermöglicht ist,

eine unterhalb der Beschleunigungswalze (14) angeordnete Reinigungseinheit (10), die einen Schüttelbehälter (18)—mit zumindest zwei übereinander liegenden Reinigungssieben (19, 20)—und einen Schütteltisch (21) aufweist, der oberhalb des oberen Reinigungssiebes (19) angeordnet ist,

Einrichtungen (23—25) für die Abgabe eines Luftstroms an das durch die Beschleunigungswalze (14) beschleunigte Produkt und an das Produkt, welches auf die Reinigungssiebe (19, 20) fällt,

gekennzeichnet durch die Kombination folgender Merkmale:

a) der untere Teil der feststehenden Quer-Wand (16) ist so geformt, daß der Fluß des durch die Beschleunigungswalze (14) beschleunigten Produkts in bezug auf eine vertikale Quer-Ebene geneigt ist,

b) der Schütteltisch (21) ist von dem Schüttelbehälter (18) unmittelbar oberhalb des vorderen Teiles des oberen Reinigungssiebes (19) innerhalb eines Bereiches fest getragen zu dem der geneigte Fluß des Produktes hin gerichtet ist,

c) zwischen die Beschleunigungswalze (14) und den Schüttelbehälter (18) ist kein weiterer Sammeltisch für das Produkt eingefügt.

## Revendication

Moissonneuse combinée comprenant:
—une unité de battage (6),
—une paire de vis distributrices transversales à contre rotation (11) destinées à dégager vers le bas le produit venant de l'unité de battage (6) et le répartissant sur toute la largeur de la machine,

—un cylindre accélérateur transversal (14) situé sous les deux vis distributrices (11), destiné à l'accélération de la chute du produit,

—une paroi transversale fixe (16) pratiquement verticale, adjacente au cylindre accélérateur (14) et adaptée pour coopérer avec celui-ci pour permettre l'accélération du produit,

—une unité de nettoyage (10) située sous le cylindre accélérateur (14), et comportant une boîte à secousses (18) ayant au moins deux tamis de nettoyage (19, 20) situés l'un sous l'autre, et une table vibrante (21) située au-dessus du tamis nettoyeur supérieur (19),

—des dispositifs (23—25) destinés à diriger un courant d'air vers le produit accéléré par le cylindre accélérateur (14) et vers le produit qui tombe sur les tamis nettoyeurs (19, 20),

caractérisée par la combinaison suivante de caractéristiques:

a) la partie inférieure de la paroi transversale fixe (16) est formée de façon à incliner par rapport à un plan vertical transversal, le flux de produit, accéléré par le cylindre accélérateur (14),

b) la table vibrante (21) est fixée rigidement à la boîte à secousses (18) directement au-dessus de la partie avant du tamis nettoyeur supérieur (19), dans une zone vers laquelle est dirigé le flux incliné de produit,

c) aucun autre bac collecteur de produit n'est interposé entre le cylindre accélérateur (14) et la boîte à secousses (18).

FIG. 1

FIG. 2